# EUROPÄISCHE PATENTSCHRIFT

(11) **EP 2 234 927 B1**
(45) Veröffentlichungstag und Bekanntmachung des Hinweises auf die Patenterteilung: **01.10.2014**
(21) Anmeldenummer: 08861135.5
(22) Anmeldetag: 28.11.2008
(51) Int. Cl.: C02F 1/76, C01B 11/02, A01N 59/00

(54) **VERFAHREN ZUR BEHANDLUNG VON WASSER MIT CHLORDIOXID**
METHOD FOR THE TREATMENT OF WATER USING CHLORINE DIOXIDE
PROCÉDÉ POUR LE TRAITEMENT DE L'EAU AVEC DU DIOXYDE DE CHLORE

(30) Priorität: 19.12.2007 DE 102007061360; 07.08.2008 DE 102008041081; 29.09.2008 DE 102008042424
(43) Veröffentlichungstag der Anmeldung: 06.10.2010
(60) Teilanmeldung: 14178174.0
(73) Patentinhaber: Infracor Gmbh, 45772 Marl (DE)
(72) Erfinder: DUVE, Hans, 48249 Dülmen (DE)
(86) Internationale Anmeldenummer: PCT/EP2008/066428
(87) Internationale Veröffentlichungsnummer: WO 2009/077309

(56) Entgegenhaltungen:
- WO-A-01/54786
- WO-A1-2005/087657
- DE-A1- 10 326 628
- IT-A- 1 351 156
- JP-A- 2008 094 662
- US-A- 1 937 780
- US-A- 4 534 952
- US-B1- 7 128 879
- "Aquacon WH01 Chlordioxiderzeugung"[Online] August 2003 (2003-08), XP002507001 Gefunden im Internet: URL:http://www.gcg-service.de/pdfs/Aquacon _Erzeugung_deutsch.pdf> [gefunden am 2008-06-05]

## Beschreibung

Die Erfindung betrifft ein Verfahren zur Behandlung von Wasser mit Chlordioxid (ClO₂).

Chlordioxid wird wegen hoher bakterizider, virizider und algizider Wirkung in der Wasseraufbereitung verwendet. Auf Grund der Explosionsneigung von gasförmigem Chlordioxid (c > 300 g/m³) und Chlordioxidlösungen (c > 26 g/l), kann Chlordioxid nicht in komprimierter Form oder in Lösungen mit höheren Konzentrationen gelagert werden. Auf Grund dieser chemischen Eigenschaften muss Chlordioxid am Verwendungsort hergestellt werden. Dies geschieht durch Mischen von Grundchemikalien in speziellen Reaktoren von Chlordioxiderzeugungsanlagen. Die Chemikalienvorratsbehälter, die Dosiereinrichtungen sowie der Reaktor der Chlordioxidanlagen bilden eine apparative, örtlich zusammenhängende Einheit, welche in der Regel in personenbegangenen Räumen aufgestellt ist.

Es gibt mehrere, aber hauptsächlich drei grundlegende Verfahren, für die Synthese von ClO₂, die kommerziell zur Wasserbehandlung benutzt werden. Diese Verfahren benutzen Natriumchlorit (NaClO₂) als eines der Ausgangsmaterialien. Die grundlegende Chemie der drei Verfahren ist nachstehend erläutert. Die dabei eingesetzten Stoffe werden als Einsatzchemikalien oder auch Reaktanten bezeichnet.

### 1. Verfahren mit Natriumchlorit und starker Säure

Im ersten Verfahren wird eine starke Säure zusammen mit Natriumchlorit eingesetzt. Die starke Säure ist meistens Chlorwasserstoffsäure oder Schwefelsäure. Unter Verwendung von Chlorwasserstoffsäure lautet die Reaktionsstöchiometrie:

5 NaClO₂ + 4 HCl → 4 ClO₂ + 5 NaCl + 2 H₂O

Außerdem kann Chlordioxid unter Verwendung von Schwefelsäure entsprechend der nachstehenden Reaktion gebildet werden:

10 NaClO₂ + 5 H₂SO₄ → 8 ClO₂ + 5 Na₂SO₄ + 2 HCl + 4 H₂O

### 2. Verfahren ausgehend von Natriumchlorit und Chlor

Dieses Verfahren verwendet gasförmiges Chlor zusammen mit Natriumchlorit. Die Reaktion läuft in zwei Stufen ab, zuerst mit der Bildung von Chlorwasserstoffsäure.

Cl₂ + H₂O→ HOCI + HCl

Das Zwischenprodukt, Hypochlorsäure (HOCI), reagiert dann mit Natriumchlorit unter Bildung von Chlordioxid (ClO₂).

HOCI + HCl + 2 NaClO₂ → 2 ClO₂ + 2 NaCl + H₂O

Die stöchiometrische Reaktion aus den beiden Gleichungen ist

Cl₂ + 2 NaClO₂ → 2 ClO₂ + 2 NaCl

3. Verfahren ausgehend von Natriumchlorit und Natriumhypochlorit

Im dritten Verfahren wird Natriumhypochlorid (NaOCl) zusammen mit Natriumchlorit verwendet:

NaOCl + HCl → NaCl + HOCI

HCl + HOCI + 2 NaClO₂ → 2 ClO₂ + 2 NaCl + H₂O

Die Synthesereaktionen zur Erzeugung von Chlordioxid werden in der Regel in Reaktoren durchgeführt, die entweder kontinuierlich oder nach dem Batch-Verfahren betrieben werden.

Zwei Explosionsgrenzen müssen bei der Chlordioxiderzeugung berücksichtigt werden: Mehr als 6 g ClO₂/l Lösung [Kontakt mit Luft] und mehr als 26 g ClO₂/l Lösung [Eigenzersetzung der wässrigen Lösung]. Bei den nach Verfahren 1 bis 3 durchgeführten Chlordioxidsynthesen wird bei der Verwendung von Einsatzchemikalien, die im Reaktionsraum zu einer Konzentration von größer ca. 26 g ClO₂/l Lösung führen würden, dem Reaktionsraum Verdünnungswasser zugegeben, um diese Konzentration der spontanen Eigenzersetzung zu unterschreiten. Die den Reaktionsraum verlassende Chlordioxidlösung, die in der Regel 20 g ClO₂/l oder weniger enthält, wird mit einem weiteren Wasserstrom auf Konzentrationen von etwa kleiner 3 g ClO₂/l Lösung verdünnt.

Damit die zum Stand der Technik gehörenden Verfahren mit befriedigenden Ergebnissen bezüglich Anlagensicherheit, Chlordioxid-Ausbeute und zeitspezifischer Erzeugungsleistung betrieben werden können, werden verschiedene verfahrenstechnische Variationen vorgenommen, unter anderem,
- Verwendung von verdünnten Einsatzchemikalien: Unterschreitung der Konzentrationen der erzeugten Chlordioxid-Lösung auf kleiner 26 g/l bzw. kleiner 6 g/l.
- Erzeugung von Unterdruck im Reaktor durch Anlegen eines Vakuums: Reduzierung der Chlordioxid-Konzentration in der Gasphase auf < 300 g/m³.
- Erzeugung von Reaktorüberdruck, z. B. durch Verwendung von Druckhalteventilen an Reaktorausgang: Verhinderung der Entstehung einer Gasphase durch Überschreitung der Löslichkeitsgrenze von Chlordioxid; Erhöhung der Ausbeute.
- Verwendung von Batch-Verfahren mit langen Reaktionszeiten: Erhöhung der Ausbeute bei Verwendung von verdünnten Einsatzchemikalien.
- Einsatz von überstöchiometrischen Säuremengen beim Chlorit/Säure-Verfahren und Einsatz von überstöchiometrischen Chlormengen beim Chlorit/Chlor-Verfahren: Erhöhung der Ausbeute.

Trotz Anwendung dieser Verfahrensweisen kann es bei einem nicht bestimmungsgemäßen Betrieb der Chlordioxiderzeugungsanlagen, z. B. durch Ausfall des Verdünnungswassers oder durch Versagen der Druckreglung zu einer Spontanzersetzung (Explosion) von Chlordioxid kommen, oder Chlordioxid kann durch Undichtigkeiten oder Bruch von Trennflächen zwischen der chlordioxid-haltigen Lösung und der Umgebung zu Gefährdungen im Umfeld der Erzeugungs-anlagen führen. Auch die Verwendung von verdünnten Einsatzchemikalien, die zu Chlordioxidlösungen mit einer Konzentration von kleiner 6 g/l führen, und damit der Verzicht auf höhere zeitspezifische Erzeugungsleistungen der Chlordioxidanlagen, kann die Gefährdung der Umgebung der Erzeugungsanlagen durch Überschreitung des MAK-Wertes von 0,1 ppm bei nicht bestimmungsgemäßem Betrieb nicht ausschließen. Um diese Gefährdungen zu minimieren, werden verschiedene Maßnahmen an den Erzeugungsanlagen selbst, als auch an den Aufstellorten der Chlordioxiderzeugungsanlagen realisiert, z. B. aufwendig Wartungsarbeiten an den Erzeugungsanlagen inklusive dem regelmäßigen Austausch der Reaktoren, räumlich isolierte Aufstellorte für die Erzeugungsanlagen, Zwangsbelüftung und Luftüberwachung der Atmosphäre der Aufstellorte durch kontinuierliche Gasanalysen.

Um solchen Problemen zu begegnen, gibt es im Stand der Technik bereits erste Ansätze, ClO₂-Reaktoren zumindest teilweise unter Wasser anzuordnen:
So offenbart US4534952A ein Verfahren zur Behandlung von Wasser mit Chlordioxid, bei welchem der Reaktionsraum, in dem das Chlordioxid erzeugt wird, von Wasser umgeben ist; bei dem das den Reaktionsraum umgebende Wasser gleichzeitig das zu behandelnde Wasser ist und bei dem das im Reaktionsraum entstehende Chlordioxid aus dem Reaktionsraum direkt in das zu behandelnde Wasser gefahren wird.

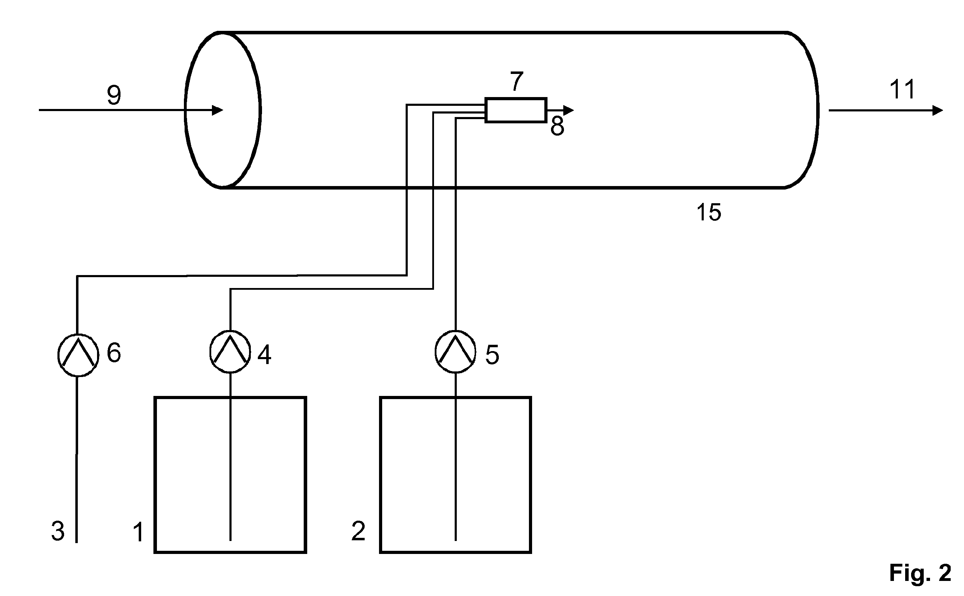

Der Reaktionsraum (reaction chamber 34) erstreckt sich bei dem in Figur 2 der D5 gezeigten Reaktor von einer Mischkammer (mixing chamber 50) bis hin zur Austrittsöffnung (outlet bore 42). Das zu behandelnde Wasser 18 strömt im Wesentlichen entlang der Rohrleitung 20, sodass etwa 2/3 des Reaktionsraums 34, 50 von dem zu behandelndem Wasser 18 umgeben ist. Des Weiteren ist zu erwarten, dass Totwasser in den Flanschaufsatz (pipe extension 70) bis zu der Dichtstelle zwischen den beiden Flanschen 68 und 46 eindringt. Es wird dabei maximal bis zu der in Figur 2 gezeichneten Dichtung vordringen, die zwischen den beiden Flanschen 46 und 68 eingelegt ist und welche in der Beschreibung (Spalte 6, Zeilen 38 bis 42) mit "angular gasket71" bezeichnet ist.

Gleichwohl findet in der Mischkammer 50 bereits eine Synthese von Chlordioxid statt, da die hier zugeführten Edukte (vgl. Spalte 5, Zeilen 55 bis 68) sehr reaktiv sind ("capable of rapid generation of chlorine dioxide", Spalte 4, Zeile 38).

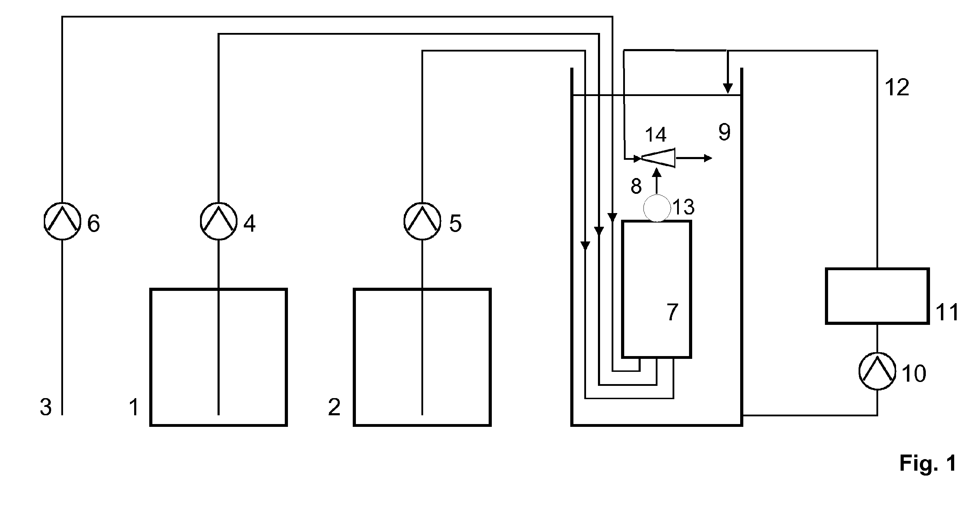

IT-1351156 offenbart in seinen Figuren 1 und 2 eine Vorrichtung zur Behandlung von Wasser mit Chlordioxid, bei welcher der Reaktionsraum R1, in welchem das Chlordioxid erzeugt wird, vollständig von Wasser umgeben ist und bei dem das den Reaktionsraum R1 umgebende Wasser gleichzeitig das zu behandelnde Wasser ist.

Allerdings wird bei dieser bekannten Vorrichtung das im Reaktionsraum (primary reactor R1) entstehende Chlordioxid nicht direkt in das umgebende, zu behandelnde Wasser gefahren, sondern zunächst in einen Sekundärreaktor (secondary reactor R2), in welchem das Chlordioxid mit einem Wasser verdünnt wird, welches nicht dem umgebenden, zu behandelnden Wassers entspricht.

Das "Oxidations-/ Desinfektionsprodukt" entsteht in dem Sekundärreaktor R2 durch Verdünnung des im Primärreaktor R1 synthetisierte Chlordioxid mit Verdünnungswasser.

Es ergibt sich die Aufgabe, die Behandlung von Wasser mit Chlordioxid sicherer und effizienter auszulegen. Speziell stellt sich die Aufgabe, bei hoher zeitspezifischer Erzeugungsleistung der Chlordioxidverfahren, das Gefährdungspotenzial dieser Art der Wasserbehandlung zu minimieren und gleichzeitig den Aufwand für die Sicherheitseinrichtungen zu reduzieren.

Es sollte ein sicheres Verfahren für Umwelt und Personen gefunden werden unter Vermeidung von Austritt von ClO₂ in die Umwelt, insbesondere in die Räume, in denen die Anlage üblicherweise betrieben wird. Gleichzeitig sollten die Vorteile, die sich durch die Verwendung von konzentrierten Einsatzchemikalien ergeben, wie z. B. geringerer Stofftransport, höhere Reaktionsgeschwindigkeit, höhere Ausbeuten, geringeres Reaktorvolumen nutzbar gemacht werden.

Gegenstand der Erfindung ist ein Verfahren nach Anspruch 1.

Bevorzugte Weiterbildungen der Erfindung sind in den Unteransprüchen niedergelegt.

Eine besonders bevorzugte Weiterbildung der Erfindung ist ein Verfahren zur Behandlung von Wasser mit Chlordioxid, gekennzeichnet durch die Merkmale
1. der Reaktionsraum, in dem das ClO₂ erzeugt wird, ist ein mit einem freien Ausgang ausgestatteter Reaktor ohne Druckregeleinrichtung und dieser ist vollständig von Wasser umgeben,
2. das den Reaktionsraum umgebene Wasser ist gleichzeitig das zu behandelnde Wasser,
3. das im Reaktionsraum entstehende ClO₂ wird aus dem Reaktionsraum direkt in das zu behandelnde Wasser gefahren, wobei die Kombination aus der Konzentrationen der Einsatzchemikalien und gegebenenfalls verwendetem Verdünnungswasser so gewählt wird, dass die Konzentration des gebildeten Chlordioxids am Reaktorausgang bei größer 3 g/l Lösung bevorzugt größer 26 g/l Lösung und besonders bevorzugt bei größer 80 g/ I Lösung liegt.

Eine weitere besonders bevorzugte Weiterbildung der Erfindung ist ein Verfahren zur Behandlung von Wasser mit Chlordioxid, gekennzeichnet durch die Merkmale
1. der Reaktionsraum, in dem das ClO₂ erzeugt wird, ist ein mit einem freien Ausgang ausgestatteter Reaktor ohne Druckregeleinrichtung und dieser ist vollständig von Wasser umgeben,
2. das den Reaktionsraum umgebene Wasser ist gleichzeitig das zu behandelnde Wasser und dieses übt auf die chlordioxidhaltige Lösung im Reaktionsraum einen Druck in einer Größe aus, dass die Löslichkeitsgrenze von Chlordioxid in Wasser bei gegebener Temperatur nicht überschritten wird,
3. das im Reaktionsraum entstehende ClO₂ wird aus dem Reaktionsraum direkt in das zu behandelnde Wasser gefahren, wobei die Kombination aus der Konzentrationen der Einsatzchemikalien und gegebenenfalls verwendetem Verdünnungswasser so gewählt wird, dass die Konzentration des gebildeten Chlordioxids am Reaktorausgang bei größer 3 g/l Lösung bevorzugt größer 26 g/l Lösung und besonders bevorzugt bei größer 80 g/ I Lösung liegt.

Überraschenderweise konnte die Aufgabe durch die Maßnahmen gemäß den Ansprüchen und der Beschreibung gelöst werden.

Erfindungswesentlich für das vorliegende Verfahren sind die Merkmale 1. bis 3. in ihrer Kombination, welches ein sicheres Arbeiten durch Vermeidung des Austritts von ClO₂ in Arbeitsräume oder die Umwelt ermöglicht und negative Auswirkungen explosionsartiger Zersetzungen beseitigt. Der Reaktionsraum, in dem das ClO₂ erzeugt wird, ist vollständig von Wasser umgeben und das den Reaktionsraum umgebene Wasser ist gleichzeitig das zu behandelnde Wasser.

Die Verlagerung des Entstehungsortes des Chlordioxids, heraus aus den personenbegangenen Räumlichkeiten und dem Lagerort der Einsatzchemikalien, erhöht die Sicherheit signifikant. Undichtigkeiten, bis hin zu Explosionen des Reaktionsraums, werden durch das große Wasservolumen praktisch neutralisiert.

Das entstandene ClO₂ wird ohne Umwege direkt aus dem Reaktionsraum, in dem das ClO₂ entsteht, in das zu behandelnde Wasser gefahren, da sich der Auslass direkt am Ende des Reaktionsraums befindet und damit ebenfalls vom zu behandelnden Wasser umgeben ist.

Es wurde ebenfalls überraschenderweise gefunden, dass es bei der Kombination aus der Verwendung von konzentrierten Einsatzchemikalien mit gegebenenfalls verwendetem Verdünnungswasser, die zu einer Chlordioxidkonzentrationen im Reaktionsraum von größer 26 g/l Lösung und besonders bevorzugt größer 80 g/l führen, zu keiner Eigenzersetzung von Chlordioxid kommt, wenn die mittlere Verweilzeit im Reaktionsraum in einem bestimmten Zeitbereich liegt, die Bildung von gasförmigen Chlordioxid verhindert wird und die den Reaktionsraum verlassende Chlordioxidlösung schlagartig auf Konzentrationen im Milligrammbereich verdünnt wird. Außerdem wurde gefunden, dass die notwendigen überstöchiometrischen, umsatzsteigernden Mehrmengen an Säure bzw. Chlor durch Erhöhung der Chlordioxidkonzentration im Reaktionsraum verringert werden können.

Die Vorteile des neuen Verfahrens werden im Folgenden näher erläutert.

Eine Undichtigkeit des Reaktionsraums, insbesondere des Reaktors kann im kontinuierlich an dessen Wand vorbeiströmenden Wasser einfach und sicher gehandhabt werden. Das bei einer Undichtigkeit des Reaktionsraums insbesondere austretende Chlordioxid wird auf eine unkritische Konzentration verdünnt und abtransportiert. Gleiches gilt für die gegebenenfalls aus dem Reaktionsraum, insbesondere des Reaktors, austretenden Einsatzchemikalien. Da die Synthese von Chlordioxid aus konzentrierten Einsatzchemikalien ohne Verdünnung durch Wasser erfolgen kann, die notwendigen überstöchiometrischen, umsatzsteigernden Mehrmengen an Säure bzw. Chlor verringert werden können und es zusätzlich zu einer signifikanten Erhöhung der Reaktionsgeschwindigkeit kommt, ergibt sich eine hohe spezifische Erzeugungsleistung des Reaktionsraums. Durch die Verringerung der notwendigen mittleren Verweilzeit der Reaktanten im Reaktionsraum besteht die Möglichkeit, das Reaktionsraumvolumen zu minimieren, wodurch z. B. der Einbau des Reaktionsraums, insbesondere des Reaktors in eine Rohrleitung möglich wird, welche von zu behandelndem Wasser durchflossen wird. Außerdem ergibt sich aus sicherheitstechnischer Sicht eine Verbesserung des Verhältnisses zwischen der im Reaktionsraum während der Synthese permanent vorhandenen Chlordioxidmenge und der Menge an zu behandelndem Wasser.

Die Verlagerung des Entstehungsortes des Chlordioxids, heraus aus den personenbegangenen Räumlichkeiten und dem Lagerort der Einsatzchemikalien, erhöht die Sicherheit signifikant. Reaktionsraumundichtigkeiten, bis hin zu Reaktionsraumexplosionen, werden durch das große Volumen an zu behandelndem Wasser, relativ zu der im Reaktionsraum vorhandenen Menge an Chlordioxid, praktisch neutralisiert.

Erfindungswesentlich für das vorliegende Verfahren sind die Merkmale 1. bis 3. in ihrer Kombination, welches ein sicheres Arbeiten, auch unter Verwendung von konzentrierten Einsatzchemikalien ohne Verdünnungswasser, durch Vermeidung des Austritts von ClO₂ in Arbeitsräume oder die Umwelt ermöglicht und negative Auswirkungen explosionsartiger Zersetzungen beseitigt.

Der Reaktionsraum, in dem das ClO₂ erzeugt wird, ist vollständig von Wasser umgeben und das den Reaktionsraum umgebene Wasser ist gleichzeitig das zu behandelnde Wasser.

Der Einsatz eines Reaktor als Reaktionsraum ist erfindungsgemäß vorgesehen.

Gemäß Verfahrensschritt 3. wird das entstandene ClO₂ ohne Umwege oder weitere zusätzliche Leitungen direkt aus dem Reaktionsraum, in dem das ClO₂ entsteht, in das zu behandelnde Wasser gefahren, da sich der Auslass direkt am Ende des Reaktionsraums, bevorzugt des Reaktors befindet und damit ebenfalls vom zu behandelnden Wasser umgeben ist. Diese Maßnahme ist die bevorzugte Variante des Verfahrens.

Weiterhin besteht die Möglichkeit, die aus dem Reaktionsraum austretende Chlordioxidlösung über eine am Ende des Reaktionsraums (Auslass) befindliche Ableitung an einen oder mehrere andere Ort zu transportieren. Dieses kann unter anderem zu einer Verteilung der Chlordioxidlösung in einem großen zu behandelnden Gesamtsystem oder zu einer Aufteilung auf mehrere zu behandelnde Einzelsysteme benutzt werden. Für die Ableitung sind alle Einrichtungen geeignet, mit denen die oben beschriebenen Effekte erzielt werden können, wie zum Beispiel fest montierte Leitungen oder flexible Schlauchsysteme. Am Ende der Ableitung können auch Aggregate zur Verteilung der Chlordioxidlösung, z.B. Wasserstrahl-Flüssigkeitspumpe, Umwälzpumpe, platziert sein.

Der Ausdruck, in das zu behandelnde Wasser gefahren, bedeutet, dass das ClO₂ aus dem Reaktionsraum, bevorzugterweise durch die in den Reaktionsraum eintretenden Einsatzchemikalien und gegebenenfalls durch das in den Reaktionsraum eintretende Verdünnungswasser direkt oder durch eine Ableitung in das zu behandelnde Wasser eingetragen wird.

Die Erneuerungsrate des zu behandelnden Wassers am Auslass des Reaktionsraums, bevorzugt des Reaktorauslasses, oder der Ableitung, kann durch technische Einrichtungen erhöht werden.

Der Reaktor, wird erfindungsgemäß ohne eine Druckregeleinrichtung betrieben. Über einen freien Ausgang am Ende des Reaktorauslasses, oder der Ableitung, wird sichergestellt, dass der Druck im Reaktionsraum nur bis zu dem Wert ansteigen kann, welcher durch das umgebende Wasser auf den Reaktionsraum ausübt wird.

Die Konzentration des sich im Reaktor bildenden Chlordioxids kann in Kombination mit Druck und Temperatur des umgebenden Wassers so eingestellt werden, dass die Löslichkeitsgrenze von Chlordioxid in Wasser nicht überschritten wird. Dadurch kann die Entstehung eines 2-Phasensystems durch eine sich bildende Chlordioxid-Gasphase verhindert werden.
Der Druck, der durch das zu behandelnde Wasser auf den Reaktionsraum ausgeübt wird, kann beispielsweise durch die Eintauchtiefe des Reaktors in einem Wasserspeicher verändert werden. Die Druckverhältnisse für einen, in einer Rohrleitung eingesetzten Reaktor, können beispielsweise durch in die Rohrleitung integrierte Absperrorgane beeinflusst werden.

Wird das zu behandelnde Wasser amAuslass des des Reaktors, mit entsprechender Rate erneuert, so kann die Konzentration der Reaktor verlassenden Chlordioxidlösung schlagartig in einen Milligrammbereich verschoben werden. Dieses kann beispielsweise dadurch erreicht werden, dass der Reaktor in eine Rohrleitung eingesetzt wird, die von zu behandelndem Wasser in einer Menge durchflossen wird, welche der gewünschten Erneuerungsrate entspricht.

Ein in einem Wasserspeicher abgetauchter Reaktor, kann örtlich in die Nähe der Saugseite einer Umwälzpumpe platziert werden, um die entsprechende Erneuerungsrate des zu behandelnden Wassers am Ende des Reaktorausgangs, oder der Ableitung, sicher zu stellen. Ist eine Umwälzpumpe nicht vorhanden, gibt es nach dem Stand der Technik eine Vielzahl von Verfahren, wie zum Beispiel Wasserstrahl-Flüssigkeitspumpen oder andere Umwälzeinrichtungen, die die gewünschte Erneuerungsrate des zu behandelnden Wassers am Ende des Reaktorauslasses oder der Ableitung, herbeiführen.

Prinzipiell können alle chemischen Herstellverfahren von ClO₂ in dem Reaktionsraum angewendet werden, insbesondere die einleitend beschriebenen Verfahren 1. bis 3., oder auch ausgehend von Chlorat.

Bevorzugt in dieser Erfindung ist das Salzsäure-Chlorit-Verfahren (1.). Dabei können die Einsatzchemikalien (Reaktanten) aus Alkali-Chlorit-Salz, bevorzugt Natriumchlorit in wässrigen Lösungen von 3,5 % bis 40 % vorliegen. Die Säure ist bevorzugt Salzsäure in einer Konzentration von 3,5 % bis 42 %.
Bei der besonders bevorzugten Ausführungsform der Erfindung werden konzentrierte Einsatzchemikalien eingesetzt und es wird nach dem Salzsäurechlorit-Verfahren (1) gearbeitet. Die Konzentration der Salzsäure beträgt dann etwa 33 - 42 % und die der Natriumchlorit-Lösung beträgt etwa 25 - 40 %. Eine Verdünnung der Einsatzchemikalien vor oder im Reaktionsraum, bevorzugt Reaktor wird nicht vorgenommen.

Die Einsatzchemikalien (Reaktanten), insbesondere Säure und Chlorit werden als wässrige Lösung, wie oben beschrieben, getrennt durch Eigendruck der Lösungen oder mit Hilfe vom Pumpen in den Reaktionsraum gefahren und zur Reaktion gebracht.

Bei der bevorzugten Fahrweise werden die Reaktanten als konzentrierte Lösungen eingesetzt und es wird auf die Verwendung von Verdünnungswasser verzichtet, so dass sich die Chlordioxidkonzentration am Ende des Reaktionsraums, also am Reaktorausgang, oder der Ableitung, auf größer 80 g/ I Lösung einstellt. Alternativ kann Verdünnungswasser verwendet werden, um die Chlordioxidkonzentration am am Reaktorausgang, oder der Ableitung, zwischen größer 3 g/ I Lösung bevorzugt größer 26 g/l Lösung und besonders bevorzugt größer 80 g/l Lösung einzustellen.

Die Vorrichtung zur Durchführung des erfindungsgemäßen Verfahrens umfasst im Wesentlichen geeignete Vorrichtungen und Apparaturen. Die Vorrichtung schließt typischerweise einen oder mehrere Tanks für die Einsatzchemikalien (Reaktanten), insbesondere einen Säurelagertank und einen Chloritlagertank ein, wobei eine wässrige Säurelösung in dem Säurelagertank und eine Lösung eines Alkalimetallsalzes eines Chloritions in dem Chloritlagertank gespeichert wird. Apparaturen sind vorgesehen, die sowohl die geeigneten Bestandteile in den Lagertanks einspeisen als auch Lösungen entnehmen zu können. Vorzugsweise schließen diese Apparaturen Pumpen und Zuleitungen ein, die ausreichen, um die Strömungsraten der Einsatzchemikalien (Reaktanten), insbesondere von wässrigen Säurelösungen und Lösungen von Alkalimetallsalzen eines Chloritions, sowie von Verdünnungswassermenge zu gewährleisten. Fachleute auf dem Gebiet können leicht geeignete Größen für die betreffenden Lagertanks, Zuleitungen und Pumpen bestimmen, um die erforderlichen Einspeisungsraten von Reaktantenlösungen zu bewerkstelligen (d. h. z.B. wässrige Säurelösungen, Lösungen eines Alkalimetallsalzes eines Chloritions).

Bevorzugt weist die Vorrichtung Ausführungsformen mit mindestens zwei Pumpen für zwei Einsatzchemikalien (Reaktanten) auf, insbesondere aber eine für die Lösung des Alkalimetallsalzes eines Chloritions und die andere für die wässrige Säurelösung, oder drei Pumpen, falls Verdünnungswasser zudosiert wird.

Die Vorrichtung umfasst des Weiteren eine Apparatur zum Mischen der Lösung der Einsatzchemikalien (Reaktanten), insbesondere die Lösung, die das Alkalimetallsalz eines Chloritions enthält und der wässrigen Säurelösung, um eine wässrige Reaktionslösung der Einsatzchemikalien (Reaktanten) bereitzustellen. Es kann jede Apparatur, die die vorgenannten Lösungen ausreichend mischt, verwendet werden, einschließlich herkömmlicher T-Stücke oder anderer Verbindungselemente, die zwei Ströme, bzw. drei Ströme zu einem vereinen, Drosselleitungen und/oder eines Rührgefäßes. Die wässrige Reaktionslösung kann dann nach dem Mischen in den Reaktionsraum eingespeist werden. Bevorzug erfolgt das Mischen der beiden Reaktanten und des gegebenenfalls verwendeten Verdünnungswasser im Reaktionsraum. Der Mischvorgang kann durch jede Einrichtung eingeleitet werden, wie z. B. Prallbleche, Injektoren oder Füllkörper, welche ein optimales Mischen gewährleistet.

Als Reaktionsraum kann jeglicher Reaktor, der zur Auslösung der Reaktion zwischen den Einsatzchemikalien (Reaktanten), insbesondere der wässrigen Säurelösung und dem Alkalimetallsalz eines Chloritions, in der Lage ist, eingesetzt werden, einschließlich kontinuierlicher Rührreaktoren, einfacher Tanks, Massen- bzw. Pfropfenflussreaktoren und Rohrreaktoren. Ein Rohrreaktor ist besonders bevorzugt.

Normalerweise besteht eine Chlordoxiderzeugungseinheit nur aus einem Rohrreaktor, jedoch kann die Erzeugungsleistung einer Einheit durch die parallele Anordnung mehrer Reaktoren, zum Beispiel zu einem Rohrbündel, erhöht werden. Der Reaktor kann sowohl temperaturgeregelt sein, als auch aus einem gut wärmeleitenden Material bestehen, um freiwerdende Reaktionswärme an das umgebende Wasser ab zu geben. Der Werkstoff, aus dem der Reaktor gefertigt wird, besteht aus Materialien, die gegen die jeweiligen Reaktionslösungen eine gute Beständigkeit aufweisen. Bei der Erzeugung von Chlordioxidlösungen mit Konzentrationen von größer 28 g/l wird als Reaktormaterial beispielsweise Titan, Alloy 31, Glas oder Chemiewerkstoffe z.B. Polymere wie z.B. PVDF oder PTFE verwendet. Das ClO₂ wird aus dem Reaktor durch einen beliebigen Mechanismus abgeführt, der zur Abführung einer wässrigen Lösung aus einem Reaktor in der Lage ist. Vorzugsweise wird die Reaktion kontinuierlich ausgeführt, und ClO₂ wird kontinuierlich aus dem Reaktor abgeführt. Nach dem Verlassen des Reaktors wird das ClO₂ direkt in das zu behandelnde Wasser dosiert, oder über eine am Reaktorauslass befindliche Ableitung an einen oder mehrere andere Ort transportiert.

Ein Rohrreaktor kommt bevorzugt gemäß der vorliegenden Erfindung zum Einsatz. Allgemein ist das Rohr des Rohrreaktors so konstruiert, dass es eine ausreichende Länge hat, um für ausreichend Verweildauer in dem Reaktor zu sorgen, um die Bestandteile angesichts der Strömungsrate der Reaktionslösung, ihrer Konzentration an Reaktanten und der Temperatur der Reaktionslösung ausreichend umzusetzen. Ein besonders bevorzugter Reaktor, der zur Herstellung eines geeigneten Generators von wässrigem Chlordioxid vor Ort eingesetzt werden kann, ist ein (temperaturgeregelter) Rohrreaktor, der eine oder mehrere Rohrschlangen enthält. Fachleute auf dem Gebiet sind in der Lage, die Größe und Gestalt des Reaktors in Abhängigkeit von der Menge des herzustellenden wässrigen Chlordioxids, der Strömungsrate und Konzentration der Reaktanden, dem pH-Wert der wässrigen Reaktionslösung, dem pH-Wert des ClO₂ und der Temperatur des Reaktors zu variieren. Fachleute auf dem Gebiet sind ebenfalls in der Lage, die Temperatur des Reaktors entsprechend zu modifizieren.

Die Reaktionszeit im Reaktionsraum kann variieren. Mit zunehmender Konzentration der Reaktanten im Reaktionsraum verringert sich das Optimum der Verweilzeit. Wird eine Lösung mit einer Chlordioxidkonzentration von 20 g/l hergestellt, liegt die mittlere Reaktorverweilzeit bei etwa 60 Minuten bis 4 Minuten, bevorzugt bei ungefähr 4 bis 6 Minuten, um eine Ausbeute von zirka 85 % zu erreichen. Steigt die Chlordioxidkonzentration gemäß der besonders bevorzugten Ausführungsform auf größer 80 g/l an, so liegt die mittlere Reaktorverweilzeit bei etwa 0,1 Minuten bis 1,5 Minuten, bevorzugt bei 0,3 bis 0,6 Minuten, besonders bevorzugt bei ungefähr 0,4 Minuten für eine 95 %ige Ausbeute. Das Minimum der mittleren Verweilzeit kann erreicht werden, wenn die Reaktanten als konzentrierte Lösungen eingesetzt werden, auf die Verwendung von Verdünnungswasser verzichtet wird und der notwendige stöchiometrische Überschuss an Säure, bzw. an Chlor minimiert wird.

Vorzugsweise wird in der den Reaktionsraum verlassenden Lösung, vor dessen Abgabe an das zu behandelnde Wasser, der Leitfähigkeitswert gemessen. Beispielsweise kann ein induktives Messverfahren verwendet werden. Aus den gemessenen Leitfähigkeitswerten können Informationen bezüglich der chemischen Umsetzung der verwendeten Reaktanten als auch gegebenenfalls auf die Menge der verwendeten Verdünnungswassermenge erhalten werden.

Die Verdünnung der den Reaktorauslass, oder der Ableitung, verlassenden Chlordioxidlösung erfolgt so, dass die Erneuerungsrate des zu behandelnden Wassers an Reaktorauslass etwa 0,1 m³/h bis 20 m³/h pro Gramm und Stunde erzeugtem Chlordioxid beträgt, vorzugsweise 1 m³/h bis 4 m³/h pro Gramm und Stunde erzeugtem Chlordioxid.

Das erfindungsgemäße Verfahren kann beispielsweise mittels der in den Figur1 und Figur 2 dargestellten Vorrichtungen durchgeführt werden.

In der Figur 1 ist ein prinzipieller Aufbau zur Durchführung des erfindungsgemäßen Verfahrens dargestellt, ohne auf bestimmte Einsatzchemikalien (Reaktanten) beschränkt zu sein. Die Aggregate mit der angegebenen Ziffer sind demnach entsprechend allgemein für alle Verfahren mit den verschiedenen möglichen Einsatzchemikalien (Reaktanten) in ihrer Funktion anzuwenden und für den Fachmann leicht erkenntlich.

In der Fig. 1 besteht die Vorrichtung zur Behandlung von Wasser mit Chlordioxid aus zwei Tanks für die Einsatzchemikalien (Reaktanten), insbesondere einem Chloritlagertank 1 mit Förderpumpe 4 und einem Säurelagertank 2 mit Förderpumpe 5. Die Wasserpumpe 6 wird über den Wasseranschluss 3 versorgt. Alle drei Förderpumpen sind über Einzelleitung mit der Unterseite des Reaktors 7 verbunden. Im Reaktor befinden sich Einrichtungen nach dem Stand der Technik, die ein schnelles, vollständiges Vermischen der zugeführten Komponenten im Reaktionsraum gewährleisten. Durch Variation der Konzentrationsgehalte der Reaktanten-Lösungen oder der verwendeten Verdünnungswassermenge wird die Konzentration der entstehenden Chlordioxid-Lösung auf größer 3 g/l, bevorzugt größer 26 g/l und besonders bevorzugt auf größer 80 g/l eingestellt.

Am oberen, entgegengesetzten Ende des Reaktors 7 befindet sich der Reaktorauslass 8, dem eine Leitfähigkeitsmessung 13 vorgeschaltet ist.

Am Übergang der Chlordioxidlösung in das zu behandelnde Wasser kann eine Wasserstrahl-Flüssigkeitspumpe 14 angeordnet sein, wodurch die Erneuerungsrate des zu behandelnden Wassers am Chlordioxideintritt erhöhen werden kann. Die Zuleitung vom Reaktorauslass 8 zur Wasserstrahl-Flüssigkeitspumpe 14 verfügt in diesem Fall über eine Entlastungsbohrung, wodurch sichergestellt wird, dass der Druck des -zu behandelnden Wasser- 9 im Reaktor 7 wirksam wird.

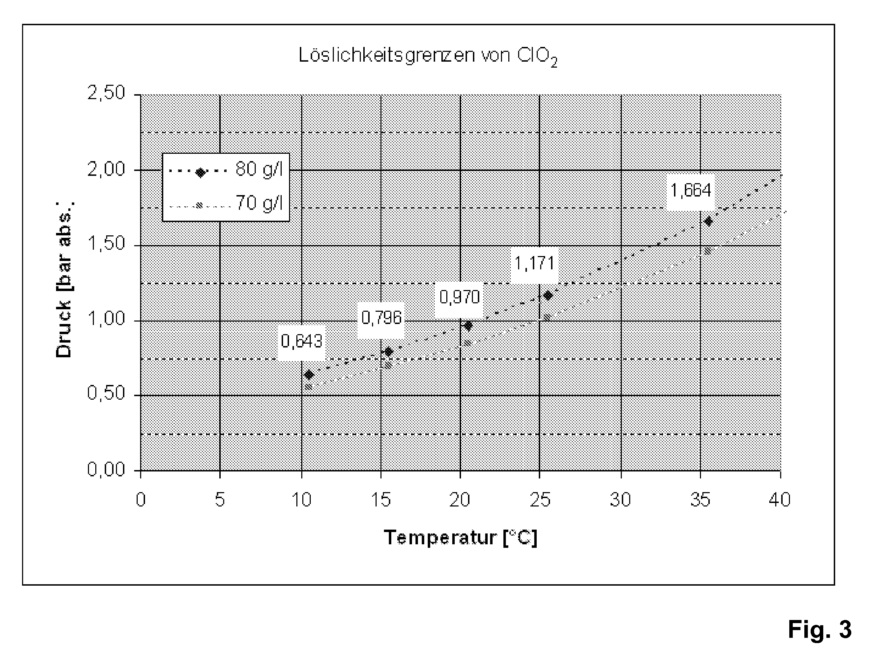

Der Reaktor ist vollständig von dem - zu behandelnden Wasser - 9, welches einen Zwischenspeicher durchfließt, umgeben. Das behandelte Wasser wird über eine Saugleitung aus dem Zwischenspeicher entnommen und mit der Umwälzpumpe 10 dem Verwendungsort -behandeltes Wasser- 11 zugeführt. Über eine Rückführleitung 12 wird das dann wiederum -zu behandelnde Wasser- 9 in den Zwischenspeicher zurückgeführt und passiert erneut den Reaktorauslass 8 oder den Ablauf aus der Wasserstrahl-Flüssigkeitspumpe 14. Der Reaktorauslass 8 kann auch in örtliche Nähe zur Saugseite der Umwälzpumpe 10 platziert werden, um einen schnellen Austausch des -zu behandelnden Wassers- 9 an Reaktorauslass 8 sicher zu stellen. Durch geeignete Wahl der Parameter "Eintauchtiefe Reaktor im zu behandelnden Wasser" (Druck) und "Konzentration der im Reaktor erzeugten Chlordioxidlösung", unter Berücksichtigung der Temperatur des zu behandelnden Wasser, wie in Fig. 3 beispielhaft dargestellt, kann die Bildung einer Chlordioxid-Gasphase unterbunden werden. Weiterhin besteht die Möglichkeit, die aus dem Reaktor 7 austretende Chlordioxidlösung über eine am Reaktorauslass 8 befindliche Ableitung (in der Fig. 1 nicht dargestellt) an einen oder mehrere andere Ort zu transportieren. Dort können auch Aggregate zur Verteilung der Chlordioxidlösung, z.B. Wasserstrahl-Flüssigkeitspumpe, Umwälzpumpe, platziert sein.

In der Figur 2 ist ein prinzipieller Aufbau zur Durchführung des erfindungsgemäßen Verfahrens dargestellt, ohne auf bestimmte Einsatzchemikalien (Reaktanten) beschränkt zu sein. Die Aggregate mit der angegebenen Ziffer sind demnach entsprechend allgemein für alle Verfahren mit den verschiedenen möglichen Einsatzchemikalien (Reaktanten) in ihrer Funktion anzuwenden und für den Fachmann leicht erkenntlich.

Eine weitere bevorzugte Vorrichtung für das erfindungsgemäße Verfahren ist in der Fig. 2 wiedergegeben. Hierbei ist es erfindungswesentlich, dass sich der Reaktionsraum in einer Rohrleitung 15 befindet, wobei die Rohrleitung von zu behandelndem Wasser durchströmt und der Reaktionsraum von zu behandelndem Wasser umströmt wird.

In der Fig. 2 ist der Reaktor 7 identisch wie in Fig. 1 mit den gleichen Zuleitungen verbunden. Der Reaktor 7 ist ebenfalls von zu behandelndem Wasser 9 umgeben, jedoch befindet sich der Reaktor 7 in einer von - zu behandelndem Wasser - 9 durchströmten Rohrleitung 14, welche das -zu behandelndem Wasser- 9 nach Passieren des Reaktorauslasses 8 dem Verwendungsort - behandeltes Wasser - 11 zuführt.

In Fig. 2 kann der Reaktor 7 wie in Fig. 1 ebenfalls mit Verdünnungswasser versorgt werden, jedoch besteht eine bevorzugte Variante darin, den Reaktor 7 ohne eine Verdünnung der Reaktanten durch Wasser (ausgeschaltet Förderpumpe Verdünnungswasser 6) im Reaktionsraum reagieren zu lassen. Dabei kann die Konzentration der entstehenden Lösung am Reaktorauslass 8 auf größer 9 g/l, [ohne Verdünnungswasser steigt der ClO2-Gehalt, auch bei Verwendung von 3,5 %igen Reaktanten, auf 9,1 g/l an] bevorzugt größer 26 g/l und besonders bevorzugt auf größer 80 g/l Chlordioxid, pro Liter ansteigen. Bei dieser bevorzugten Variante ist es vorteilhaft, das Reaktorvolumen maximal zu verkleinern. In der Regel sind keine weiteren Einrichtungen zur Erhöhung der Erneuerungsrate des zu behandelnden Wassers 9 am Reaktorauslass 8 notwendig, um die Konzentration der Chlordioxidlösung, nach dem Eintritt in das zu behandelnde Wasser 9, schnell von vorzugsweise größer 80 g pro Liter in den Milligrammbereich zu verschieben. Ebenfalls ist es in der Regel nicht schwierig, den Druck des zu behandelnden Wasser 9 in der Rohrleitung 14 so ein zu stellen, dass die Löslichkeitsgrenze des Chlordioxids in der wässrigen Lösung im Reaktor 7, wie in Fig. 3 dargestellt, nicht überschritten wird.

### Legende Fig. 1 und Fig. 2 :

- 1: Chloritlagertank
- 2: Säurelagertank
- 3: Wasseranschluss
- 4: Förderpumpe Chlorit
- 5: Förderpumpe Säure
- 6: Förderpumpe Verdünnungswasser
- 7: Reaktor (Reaktionsraum)
- 8: Reaktorauslass
- 9: Zu behandeltes Wasser
- 10: Umwälzpumpe -behandeltes Wasser-
- 11: Verwendungsort -behandeltes Wasser-
- 12: Rückführung -zu behandelndes Wasser-
- 13: Leitfähigkeitsmessung
- 14: Wasserstrahl-Flüssigkeitspumpe fakultativ
- 15: Rohrleitung in Figur 2

In der Figur 3 sind die Löslichkeitsgrenzen von Chlordioxid in einer wässrigen Lösung in Abhängigkeit von Druck und Temperatur, beispielhaft für die Chlordioxidkonzentrationen 70 g/l und 80 g/l dargestellt.

Das erfindungsgemäße Verfahren wird durch folgende Beispiele erläutert:

### Beispiel 1

Verwendet wird die in Fig. 1 beschriebene Vorrichtung. Die wässrige Lösung im Chloritlagertank 1 enthält 25 % Natriumchlorit und mit der Förderpumpe 4 werden 2,5 l/h dieser Lösung in den Reaktor 7 gefahren. Aus dem Säurelagertank 2 werden 2,5 l/h einer 32%igen wässrigen Salzsäure-Lösung mit der Förderpumpe 5 zeitgleich dem Reaktor 7 zugeführt. Über die ebenfalls zeitgleich aus dem Wasseranschluss 3 mit der Förderpumpe 6 dem Reaktor 7 zugeführte Verdünnungswassermenge von 5 l/h wird die Konzentration der entstehenden Chlordioxid-Lösung auf 42 g/l [bei einer Ausbeute von 92 %] eingestellt. Der Reaktor verfügt über ein freies Volumen von 0,33 Liter und die Verweilzeit des Reaktionsgemisches im Reaktionsraum beträgt 2 Minuten. 10 Liter Chlordioxid-Lösung mit einem Gehalt von 42 g/l, werden pro Stunde über den Reaktorauslass 8 einer mit zu behandelndem Wasser betriebenen Wasserstrahl-Flüssigkeitspumpe 14 zugeführt und anschließend mit der rückgeführten Menge zu behandelnden Wassers abgemischt. Der mit der Leitfähigkeitsmessung 13 ermittelte Wert beträgt 0,42 S/cm. 1000 m³ des mit Chlordioxid angereicherten Wassers werden pro Stunde von der Umwälzpumpe -behandeltes Wasser- 10 aus dem Zwischenspeicher entnommen und dem Verwendungsort -behandeltes Wasser- 11 zur Verfügung gestellt. Über die Rückführung -zu behandelndes Wasser- 12 gelangt das an Chlordioxid verarmte Wasser in den Zwischenspeicher zurück. Auf dem Weg zur Ansaugstelle der Umwälzpumpe -behandeltes Wasser- 10 nimmt das zu behandelnde Wasser das austretende chlordioxidhaltige Wasser auf und reduziert dabei die Chlordioxidkonzentration im Mischwasser schnell auf 0,42 mg/l. Der Reaktorauslass 8 ist im Zwischenspeicher 4 Meter unter die Wasseroberfläche abgesenkt und die Temperatur des zu behandelnden Wassers beträgt 32 °C. Bei den im Beispiel 1 beschriebenen Vorrichtungen handelt es sich bei dem -zu behandelnden Wasser- 9 um Rückkühlwasser einer Umlaufkühlung, welches sich in einer Kühlturmtasse (Zwischenspeicher) befindet. Mit der Kreislaufpumpe 10 wird das Kühlwasser über Wärmetauschflächen einer chemischen Produktionsanlage mit exothermen Wärmequellen geleitet (Verwendungsort -behandeltes Wasser- 11) und anschließend über die Einbauten eines Verdunstungskühlturmes verrieselt, bevor es wieder die Kühlturmtasse (Zwischenspeicher) erreicht. Die Kühlturmtasse verfügt über ein Volumen von 800 m³. Der Wasserstand im Zwischenspeicher ist standgeregelt, so dass das verdunstete Kühlwasser automatisch durch Frischwasser ersetzt wird.

### Beispiel 2

Verwendet wird die in Fig. 2 beschriebene Vorrichtung. Die wässrige Lösung im Chloritlagertank 1 enthält 25 % Natriumchlorid und mit der Förderpumpe 4 werden 6 l/h dieser Lösung in den Reaktor 7 gefahren. Aus dem Säurelagertank 2 werden 5 l/h einer 30%igen wässrigen Salzsäure-Lösung mit der Förderpumpe 5 zeitgleich dem Reaktor 7 zugeführt. Der Reaktor 7 ist in eine Rohrleitung 14 eingebaut, welche mit einer Menge von 100 m³ -zu behandelnde Wasser- 9 pro Stunde durchflossen wird. Über die Förderpumpe 6 wird dem Reaktor kein Verdünnungswasser zugeführt. Der Reaktor verfügt über ein freies Volumen von 0,075 Liter und die Verweilzeit des Reaktionsgemisches im Reaktionsraum beträgt 0,4 Minuten. 11 Liter Chlordioxid-Lösung mit einem Gehalt von 94 g/l werden pro Stunde über den Reaktorauslass 8 in das den Reaktor 7 umfließende, -zu behandelnde Wasser- 9 abgegeben, wodurch die Konzentration des Reaktionsgemisches am Reaktorauslass 8 durch Abmischung mit dem -zu behandelnden Wasser- 9 schlagartig auf 10 mg/l reduziert wird. Bei einem Säureüberschuss von 300 % wird das Chlordioxid mit einer Ausbeute von 95 % erzeugt. Der Druck des -zu behandelnden Wassers- 9 in der Rohrleitung 14 beträgt 5,5 bar und dessen Erneuerungsrate am Reaktorauslass 8 liegt bei 0,1 m³/h pro Gramm und Stunde erzeugtem Chlordioxid. Das -behandelte Wasser- 11 wird dem Verwendungsort an Ende der Rohrleitung zur Verfügung gestellt. Bei den im Beispiel 2 beschriebenen Einrichtungen handelt es sich um die Behandlung von 100 m³/h Waschwasser, welches mit einer Chlordioxid-Konzentration von 10 mg/l in einer Reinigungsanlage Verwendung findet.

### Beispiel 3

Verwendet wird die in Fig. 1 beschriebene Vorrichtung. Die wässrige Lösung im Chloritlagertank 1 enthält 24,5 % Natriumchlorit und mit der Förderpumpe 4 werden 5 l/h dieser Lösung in den Reaktor 7 gefahren. Aus dem Säurelagertank 2 werden 5 l/h einer 32%igen wässrigen Salzsäure-Lösung mit der Förderpumpe 5 zeitgleich dem Reaktor 7 zugeführt. Über die ebenfalls zeitgleich aus dem Wasseranschluss 3 mit der Förderpumpe 6 dem Reaktor 7 zugeführte Verdünnungswassermenge von 28 l/h wird die Konzentration der entstehenden Chlordioxid-Lösung auf 19,7 g/l [bei einer Ausbeute von 83 %] eingestellt. Der Reaktor verfügt über ein freies Volumen von 6 Litern und die Verweilzeit des Reaktionsgemisches im Reaktionsraum beträgt 9,5 Minuten. 38 Liter Chlordioxid-Lösung mit einem Gehalt von 19,7 g/l, werden pro Stunde über den Reaktorauslass 8, welcher sich in der Nähe der Saugleitung der Umwälzpumpe 10 befindet, in das den Reaktor umgebende, -zu behandelnde Wasser- 9 abgegeben. 2000 m³ des mit Chlordioxid angereicherten Wassers werden pro Stunde von der Umwälzpumpe -behandeltes Wasser- 10 aus dem Zwischenspeicher entnommen und dem Verwendungsort -behandeltes Wasser- 11 zur Verfügung gestellt. Über die Rückführung -zu behandelndes Wasser- 12 gelangt das an Chlordioxid verarmte Wasser in den Zwischenspeicher zurück. Auf dem Weg zur Ansaugstelle der Umwälzpumpe -behandeltes Wasser- 10 nimmt das Wasser das am Reaktorauslass 8 austretende chlordioxidhaltige Wasser auf und reduziert dabei die Chlordioxid-konzentration im Mischwasser schnell unter die kritische Konzentration von 6 g/l. Vor dem Verwendungsort -behandeltes Wasser- 11 liegt die Konzentration an Chlordioxid bei etwa 0,4 mg pro Liter Wasser.

## Patentansprüche

1. Verfahren zur Behandlung von Wasser mit Chlordioxid (ClO₂), **gekennzeichnet durch** die Merkmale
1. der Reaktionsraum, in dem das ClO₂ erzeugt wird, ist vollständig von Wasser umgeben,
2. das den Reaktionsraum umgebene Wasser ist gleichzeitig das zu behandelnde Wasser,
3. das im Reaktionsraum entstehende ClO₂ wird aus dem Reaktionsraum direkt in das zu behandelnde Wasser gefahren,
wobei der Reaktionsraum ein Reaktor ist,
welcher ohne eine Druckregeleinrichtung betrieben wird,
und wobei der Reaktor über einen freien Ausgang am Reaktorausgang verfügt, so dass der Druck im Reaktionsraum nur bis zu dem Wert ansteigen kann, welcher durch das umgebende Wasser auf den Reaktionsraum ausübt wird.

2. Verfahren nach mindestens einem der vorherigen Ansprüche,
**dadurch gekennzeichnet,**
**dass** der Reaktor ein Rohrreaktor ist.

3. Verfahren nach mindestens einem der vorherigen Ansprüche,
**dadurch gekennzeichnet,**
**dass** die Reaktionszeit der Reaktanten im Reaktionsraum von 4 bis 60 Minuten, bevorzugt 4 bis 6 Minuten, besonders bevorzugt von 0,1 bis 1,5 Minuten, ganz besonders bevorzugt 0,3 Minuten bis 0,6 Minuten variiert.

4. Verfahren nach mindestens einem der vorherigen Ansprüche,
**dadurch gekennzeichnet,**
**dass** das Chlordioxid aus einem Alkali-Chlorit-Salz und Salzsäure (Reaktanten) erzeugt wird.

5. Verfahren nach mindestens einem der vorherigen Ansprüche,
**dadurch gekennzeichnet,**
**dass** das Chlordioxid aus Natriumchlorit und Salzsäure (Reaktanten) erzeugt wird.

6. Verfahren nach mindestens einem der vorherigen Ansprüche,
**dadurch gekennzeichnet,**
**dass** das Chlordioxid aus Natriumchlorit in einer wässrigen Lösung von 3,5 % bis 40 % erzeugt wird.

7. Verfahren nach mindestens einem der vorherigen Ansprüche,
**dadurch gekennzeichnet,**
**dass** das Chlordioxid aus Salzsäure in einer Konzentration von 3,5 % bis 42% erzeugt wird.

8. Verfahren nach mindestens einem der vorherigen Ansprüche,
**dadurch gekennzeichnet,**
**dass** das Chlordioxid aus Natrimchlorit und Chlor (Reaktanten) erzeugt wird.

9. Verfahren nach mindestens einem der vorherigen Ansprüche,
**dadurch gekennzeichnet,**
**dass** in der den Reaktionsraum verlassenden Lösung der Leitfähigkeitswert gemessen wird.

10. Verfahren nach mindestens einem der vorherigen Ansprüche,
**dadurch gekennzeichnet,**
**dass** sich der Reaktionsraum in einer Rohrleitung befindet und wobei die Rohrleitung von dem zu behandelnden Wasser durchströmt wird.

11. Verfahren nach mindestens einem der vorherigen Ansprüche,
wobei eine Verdünnung der den Reaktorauslass verlassenden Chlordioxidlösung so erfolgt, dass die Erneuerungsrate des zu behandelnden Wassers an Reaktorauslass etwa 0,1 m³/h bis 20 m³/h pro Gramm und Stunde erzeugtem Chlordioxid beträgt, vorzugsweise 1 m³/h bis 4 m³/h pro Gramm und Stunde erzeugtem Chlordioxid.

12. Verfahren nach mindestens einem der vorherigen Ansprüche,
wobei die Kombination aus der Konzentrationen der Einsatzchemikalien und gegebenenfalls verwendetem Verdünnungswasser so gewählt wird, dass die Konzentration des gebildeten Chlordioxids am Reaktorausgang bei größer 3 g/l Lösung bevorzugt größer 26 g/l Lösung und besonders bevorzugt bei größer 80 g/ I Lösung liegt.

13. Verfahren nach einem der der vorherigen Ansprüche,
**gekennzeichnet durch** die Merkmale
1. das den Reaktionsraum umgebene Wasser übt auf die chlordioxidhaltige Lösung im Reaktionsraum einen Druck in einer Größe aus, dass die Löslichkeitsgrenze von Chlordioxid in Wasser bei gegebener Temperatur nicht überschritten wird,
2 die Kombination aus der Konzentrationen der Einsatzchemikalien und gegebenenfalls verwendetem Verdünnungswasser wird so gewählt, dass die Konzentration des gebildeten Chlordioxids am Reaktorausgang bei größer 3 g/l Lösung bevorzugt größer 26 g/l Lösung und besonders bevorzugt bei größer 80 g/ I Lösung liegt.

14. Verfahren nach mindestens einem der vorherigen Ansprüche,
**dadurch gekennzeichnet,**
**dass** konzentrierte Einsatzchemikalien eingesetzt werden und nach dem Salzsäurechlorit-Verfahren (1) gearbeitet wird, wobei die Konzentration der Salzsäure 33 - 42 % und die der Natriumchlorit-Lösung 25 - 40 % beträgt.

15. Verfahren nach mindestens einem der vorherigen Ansprüche,
**dadurch gekennzeichnet,**
**dass** das im Reaktionsraum entstehende ClO₂ nicht direkt aus dem Reaktionsraum in das zu behandelnde Wasser gefahren wird, sondern die aus dem Reaktionsraum austretende Chlordioxidlösung über eine am Ende des Reaktionsraums (Auslass) befindliche Ableitung an einen oder mehrere andere Ort transportiert wird.

16. Verfahren nach mindestens einem der vorherigen Ansprüche,
**dadurch gekennzeichnet,**
**dass** es sich bei dem zu behandelnden Wasser um Rückkühlwasser einer Umlaufkühlung, welches sich in einer Kühlturmtasse (Zwischenspeicher) befindet, handelt.

## Claims

1. Method of treating water with chlorine dioxide (ClO₂), **characterized by** the features
1. the reaction chamber in which the ClO₂ is generated is completely surrounded by water,
2. the water surrounding the reaction chamber is simultaneously the water which is to be treated,
3. the ClO₂ formed in the reaction chamber is passed out of the reaction chamber directly into the water which is to be treated, wherein the reaction chamber is a reactor which is operated without a pressure control appliance, and wherein the reactor has a free outlet at the reactor outlet, in such a manner that the pressure in the reaction chamber can only increase to the value which is exerted on the reaction chamber by the surrounding water.

2. Method according to the preceding claim, **characterized in that** the reactor is a tubular reactor.

3. Method according to at least one of the preceding claims, **characterized in that** the reaction time of the reactants in the reaction chamber varies from 4 to 60 minutes, preferably from 4 to 6 minutes, particularly preferably from 0.1 to 1.5 minutes, most particularly preferably from 0.3 minutes to 0.6 minutes.

4. Method according to at least one of the preceding claims, **characterized in that** the chlorine dioxide is generated from an alkali metal chlorite salt and hydrochloric acid (reactants).

5. Method according to at least one of the preceding claims, **characterized in that** the chlorine dioxide is generated from sodium chlorite and hydrochloric acid (reactants).

6. Method according to at least one of the preceding claims, **characterized in that** the chlorine dioxide is generated from sodium chlorite in an aqueous solution of from 3.5% to 40%.

7. Method according to at least one of the preceding claims, **characterized in that** the chlorine dioxide is generated from hydrochloric acid in a concentration of from 3.5% to 42%.

8. Method according to at least one of the preceding claims, **characterized in that** the chlorine dioxide is generated from sodium chlorite and chlorine (reactants).

9. Method according to at least one of the preceding claims, **characterized in that** the conductivity value is measured in the solution leaving the reaction chamber.

10. Method according to at least one of the preceding claims, **characterized in that** the reaction chamber is situated in a pipe, the water to be treated flowing through the pipe.

11. Method according to at least one of the preceding claims, wherein the chlorine dioxide solution leaving the reactor outlet is diluted in such a manner that the renewal rate at the reactor outlet of the water which is to be treated is from about 0.1 m³/h to 20 m³/h per gram and hour of chlorine dioxide generated, preferably from 1 m³/h to 4 m³/h per gram and hour of chloride dioxide generated.

12. Method according to at least one of the preceding claims, wherein the combination of the concentrations of the starting chemicals and dilution water used if desired is selected in such a manner that the concentration at the reactor outlet of the chlorine dioxide formed is greater than 3 g/l of solution, preferably greater than 26 g/l of solution, and particularly preferably greater than 80 g/l of solution.

13. Method according to any one of the preceding claims, **characterized by** the features
1. the water surrounding the reaction chamber exerts a pressure on the chlorine dioxide-containing solution in the reaction chamber of a magnitude that the solubility limit of chlorine dioxide in water at a given temperature is not exceeded,
2. the combination of the concentrations of the starting chemicals and dilution water used if desired is selected in such a manner that the concentration at the reactor outlet of the chlorine dioxide formed is greater than 3 g/l of solution, preferably greater than 26 g/l of solution, and particularly preferably greater than 80 g/l of solution.

14. Method according to at least one of the preceding claims,
**characterized in that**
concentrated starting chemicals are used and the hydrochloric acid/chlorite method (1) is employed, wherein the concentration of the hydrochloric acid is 33-42% and that of the sodium chlorite solution is 25-40%.

15. Method according to at least one of the preceding claims,
**characterized in that**
the ClO₂ formed in the reaction chamber is not conducted directly out of the reaction chamber into the water to be treated, but the chlorine dioxide solution leaving the reaction chamber is instead transported through a discharge present at the end of the reaction chamber (outlet) to one or more other sites.

16. Method according to at least one of the preceding claims, **characterized in that** the water which is to be treated is recirculation cooling water of a circulation cooling stage which is situated in a cooling tower pond (intermediate store).

## Revendications

1. Procédé de traitement d'eau avec du dioxyde de chlore (ClO₂), **caractérisé par** les caractéristiques suivantes :
1. la chambre de réaction dans laquelle le ClO₂ est formé est entièrement entourée d'eau,
2. l'eau entourant la chambre de réaction est simultanément l'eau à traiter,
3. le ClO₂ formé dans la chambre de réaction est introduit directement dans l'eau à traiter à partir de la chambre de réaction,
la chambre de réaction étant un réacteur,
qui est exploité sans dispositif de régulation de la pression,
et le réacteur comprenant une sortie libre à la sortie du réacteur, de sorte que la pression dans la chambre de réaction ne puisse augmenter que jusqu'à la valeur qui est exercée sur la chambre de réaction par l'eau qui l'entoure.

2. Procédé selon la revendication précédente, **caractérisé en ce que** le réacteur est un réacteur tubulaire.

3. Procédé selon au moins l'une quelconque des revendications précédentes, **caractérisé en ce que** la durée de réaction des réactifs dans la chambre de réaction est de 4 à 60 minutes, de préférence de 4 à 6 minutes, de manière particulièrement préférée de 0,1 à 1,5 minute, de manière tout particulièrement préférée de 0,3 minute à 0,6 minute.

4. Procédé selon au moins l'une quelconque des revendications précédentes, **caractérisé en ce que** le dioxyde de chlore est formé à partir d'un sel de chlorite alcalin et d'acide chlorhydrique (réactifs).

5. Procédé selon au moins l'une quelconque des revendications précédentes, **caractérisé en ce que** le dioxyde de chlore est formé à partir de chlorite de sodium et d'acide chlorhydrique (réactifs).

6. Procédé selon au moins l'une quelconque des revendications précédentes, **caractérisé en ce que** le dioxyde de chlore est formé à partir de chlorite de sodium dans une solution aqueuse de 3,5 % à 40 %.

7. Procédé selon au moins l'une quelconque des revendications précédentes, **caractérisé en ce que** le dioxyde de chlore est formé à partir d'acide chlorhydrique en une concentration de 3,5 % à 42 %.

8. Procédé selon au moins l'une quelconque des revendications précédentes, **caractérisé en ce que** le dioxyde de chlore est formé à partir de chlorite de sodium et de chlore (réactifs).

9. Procédé selon au moins l'une quelconque des revendications précédentes, **caractérisé en ce que** la conductivité de la solution quittant la chambre de réaction est mesurée.

10. Procédé selon au moins l'une quelconque des revendications précédentes, **caractérisé en ce que** la chambre de réaction se trouve dans une canalisation, la canalisation étant traversée par l'eau à traiter.

11. Procédé selon au moins l'une quelconque des revendications précédentes, dans lequel une dilution de la solution de dioxyde de chlore quittant la sortie du réacteur a lieu de sorte que le taux de renouvellement de l'eau à traiter à la sortie du réacteur soit d'environ 0, 1 m³/h à 20 m³/h par gramme et heure de dioxyde de chlore formé, de préférence de 1 m³/h à 4 m³/h par gramme et heure de dioxyde de chlore formé.

12. Procédé selon au moins l'une quelconque des revendications précédentes, dans lequel la combinaison des concentrations des produits chimiques utilisés et éventuellement de l'eau de dilution utilisée est choisie de sorte que la concentration du dioxyde de chlore formé à la sortie du réacteur soit supérieure à 3 g/l de solution, de préférence supérieure à 26 g/l de solution et de manière particulièrement préférée supérieure à 80 g/l de solution.

13. Procédé selon l'une quelconque des revendications précédentes, **caractérisé par** les caractéristiques suivantes :
1. l'eau entourant la chambre de réaction exerce sur la solution contenant du dioxyde de chlore dans la chambre de réaction une pression telle que la limite de solubilité du dioxyde de chlore dans l'eau à une température donnée ne soit pas dépassée,
2. la combinaison des concentrations des produits chimiques utilisés et éventuellement de l'eau de dilution utilisée est choisie de sorte que la concentration du dioxyde de chlore formé à la sortie du réacteur soit supérieure à 3 g/l de solution, de préférence supérieure à 26 g/l de solution et de manière particulièrement préférée supérieure à 80 g/l de solution.

14. Procédé selon au moins l'une quelconque des revendications précédentes, **caractérisé en ce que** des produits chimiques concentrés sont utilisés et le procédé au chlorite d'acide chlorhydrique (1) est utilisé, la concentration de l'acide chlorhydrique étant de 33 à 42 % et celle de la solution de chlorite de sodium étant de 25 à 40 %.

15. Procédé selon au moins l'une quelconque des revendications précédentes, **caractérisé en ce que** le ClO₂ formé dans la chambre de réaction n'est pas introduit directement à partir de la chambre de réaction dans l'eau à traiter, mais la solution de dioxyde de chlore sortant de la chambre de réaction est transportée à un ou plusieurs autres emplacements par une conduite de déchargement se trouvant à l'extrémité de la chambre de réaction (sortie).

16. Procédé selon au moins l'une quelconque des revendications précédentes, **caractérisé en ce que** l'eau à traiter est une eau de refroidissement recyclée d'un refroidissement par circulation, qui se trouve dans un bassin d'une tour de refroidissement (stockage intermédiaire).
